# NEW EUROPEAN PATENT SPECIFICATION

(11) **EP 1 839 755 B2**
(45) Date of publication and mention of the opposition decision: **13.11.2019**
(45) Mention of the grant of the patent: 06.03.2013
(21) Application number: 07005805.2
(22) Date of filing: 21.03.2007
(51) Int. Cl.: B03B 9/06, B07B 4/08, C22B 7/00

(54) **Sorting apparatus and sorting method**
Sortiervorrichtung und Verfahren
Appareil et procédé de tri

(30) Priority: 27.03.2006 JP 2006086593
(43) Date of publication of application: 03.10.2007
(73) Proprietor: FUJIFILM Corporation, Minato-ku Tokyo (JP)
(72) Inventor: Osada, Masakazu, Haibara-gun Shizuoka-ken (JP); Masuda, Akira, Haibara-gun Shizuoka-ken (JP)
(74) Representative: Grünecker Patent- und Rechtsanwälte PartG mbB

(56) References cited:
- EP-A2- 0 581 089
- DE-A1- 4 421 360
- DE-A1- 10 336 802
- DE-C1- 4 329 773
- JP-A- H10 337 536
- JP-A- 2003 094 031
- US-A- 4 319 394
- US-A- 5 411 214
- US-A- 5 871 161
- BILITEWSKI ET AL: "Abfallwirtschaft - Handbuch für Praxis und Lehre", 2000
- Nickel: "Recycling-Handbuch-Strategien-Technologie n-Produkte", 1996

## Description

The present invention relates to a sorting apparatus and a sorting method that sort nonmetallic impurities and lithographic printing plates.

US 5 411 214 A discloses a sorting apparatus comprising a cutting portion, a grinding portion and s sucking portion.

In the lithographic printing plate manufacturing process, nonmetallic impurities (photosensitive layer protective material, packaging material, etc.) become mixed with defective products (also including unused printing plates that have been shipped but returned) resulting from process trouble or the like and in cut scraps that arise when material is cut into a predetermined width and length as lithographic printing plates. Those defective products and cut scraps are processed (sold off) as common aluminum scrap and become reclaimed alloy, and have not become raw material for lithographic printing plates. That is, even though lithographic printing plates comprise an aluminum alloy adjusted such that the support thereof is a predetermined alloy component, defective products and cut scraps have not been recycled such that they may again become lithographic printing plates.

For this reason, as methods of separating lithographic priming plates and nonmetallic impurities, Japanese Patent Application Laid-open (JP-A) No. 2005-186415 discloses a method using a polishing brush and an abrasive and a method using a ball and an abrasive. Thus, nonmetallic impurities are separated from lithographic printing plates such that the lithographic printing plates may be recycled.

However, there are various sizes of unused lithographic printing plates that arise in the lithographic printing plate manufacturing process, from small fragment size to large sheets, and it has been necessary to manually sort the unused lithographic printing plates into predetermined sizes before separating the lithographic printing plates and the nonmetallic impurities, which has cost money and time.

The present invention has been made in view of these circumstances and provides a sorting apparatus and a sorting method that sort nonmetallic impurities and lithographic printing plates at a low cost and in a short amount of time.

The above and other objects of the invention are achieved by the sorting apparatus for sorting non-metallic impurities and lithographic printing plates according to claim 1 and the method for sorting non-metallic impurities and lithographic printing plates according to claim 11. Preferred embodiments are claimed in the dependent claims.

According to an aspect of the invention, there is provided a sorting apparatus according to claim 1.

An exemplary embodiment of the present invention will be described in detail based on the following figures, wherein:
FIG. 1 is a perspective diagram showing the entire configuration of a lithographic printing plate processing line;
FIG. 2 is a perspective diagram showing a sorting line disposed with one sorting apparatus pertaining to the exemplary embodiment of the present invention;
FIG. 3 is a perspective diagram showing a sorting line disposed with another sorting apparatus pertaining to the exemplary embodiment of the present invention; and
FIG. 4 is a descriptive diagram describing a sorting method resulting from a magnetic separator.

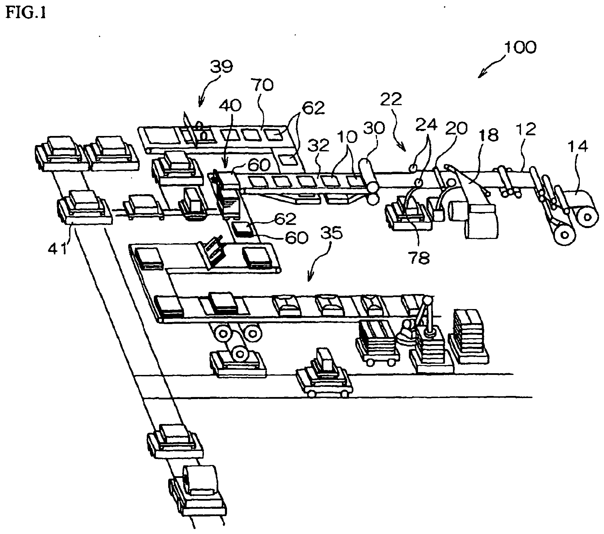

In FIG. 1, a processing line 100 of ordinary photosensitive lithographic printing plates (called "PS plates" below) is shown.

A feeder 14 that sequentially unrolls a web 12 that has been rolled into a roll beforehand is disposed on the upstream side (the upper right side in FIG. 1) of the processing line 100. The long web 12 fed from the feeder 14 is curl-corrected, and a slip sheet 18 is adhered to the long web 12. Then, in a state where the slip sheet 18 is brought into close contact with the web 12 by charging, the web 12 reaches a notcher 20 that disposes notches in the web 12. Next, cutting blades 24 configuring a cut processing portion 22 move in the width direction of the web 12 and continuously cut the web 12 at the notched positions. Thus, ear portions 78 are cut off from both side end portions of the web 12.

The web 12 that has been cut into a predetermined cut width in this manner is cut by a flying cutter 30 at an instructed timing. Thus, PS plates 10 in the form of sheets having a set sheet size are manufactured. The PS plates 10 are sent by a conveyor 32 to a stacking device 40, which stacks together a predetermined number of the PS plates 10 to configure a stack 60.

A cutting portion 39 that cuts thick paper 62 (called "protective cardboard 62" below) serving as protective material is disposed in the vicinity of the stacking device 40, and the protective board 62 is cut beforehand into a size matching that of the stack 60.

The cut protective cardboard 62 is conveyed by a conveyor 70 and placed on at least the uppermost part of the stack 60. The protective cardboard 62 prevents the PS plates 10 configuring the stack 60 from being bent, deformed by external force, or damaged.

Then, the stack 60 is sent via a conveyor portion 35 to a storage facility such as a rack warehouse or to a packaging step, and is packaged by packaging material (tape, inner packaging material, external packaging material, etc.). It is also possible to stack the stack 60 on a skid 41 for an automatic platemaker.

As described above, the PS plates 10 are packaged and shipped, but depending on the packaged state, the slip sheets 18 and other packaging materials may be omitted.

Here, as the aluminum plate serving as the metal web, for example, JIS1050 material, JIS 1100 material, JIS1070 material, an Al-Mg alloy, an Al-Mn alloy, an Al-Mn-Mg alloy, an Al-Zr alloy, and an Al-Mg-Si alloy and the like, can be applied. In the aluminum plate manufacturing process of the manufacturer, an aluminum ingot complying with the above standards is manufactured, the aluminum ingot is hot-rolled, a heat treatment called annealing is administered as needed, and the aluminum ingot is finished as a band-like aluminum plate formed in a predetermined thickness by cold rolling.

The PS plate 10 is formed by applying a coating layer (a photosensitive layer in the case of a photosensitive printing plate or a heat-sensitive layer in the case of a heat-sensitive printing plate) to one side of a thin aluminum plate formed in a rectangular plate shape. Platemaking treatments such as exposure, development, and gumming are administered to the coating layer, the PS plate 10 is set in a printer, and ink is applied, whereby characters or images are printed on a paper surface.

It will be noted that, although the specific configuration of the PS plate 10 is not particularly limited, a lithographic printing plate capable of direct platemaking from digital data can be made by making a lithographic printing plate for heat-format and photon-format laser printing.

Additionally, the side of the PS plate 10 to which the coating layer has been applied is called the image forming surface, and the opposite side - that is, the side to which the coating layer has not been applied - is called the non-image forming surface. It will be noted that the PS plate 10 of the present exemplary embodiment is a plate of a previous stage to which treatments (exposure, development, etc.) necessary for printing are administered and, depending on the case, is sometimes called a lithographic printing plate precursor or lithographic printing plate material.

The shape and the like of the PS plate 10 are not particularly limited. For example, the plate may be one comprising a photosensitive layer or a heat-sensitive layer applied to one side of an aluminum plate having a thickness of 0.1 to 0.5 mm, a long edge (width) of 200 to 1650 mm, and a short edge (length) of 200 to 3150 mm.

The slip sheets to be used may be common slip sheets used for lithographic printing plates, and a representative example is given below. As long as the slip sheets 18 can reliably protect the coating layer of the web 12, the specific configuration thereof is not limited. For example, paper that uses 100% wood pulp, paper that does not use 100% pulp but uses synthetic pulp, and paper where a low-density polyethylene layer is disposed on the surfaces of these types of paper can be used as the slip sheets 18.

Particularly with paper that does not use synthetic pulp, the slip sheets 18 can be manufactured at a low cost because the material cost is low. More specific examples include slip sheets made from bleached kraft pulp whose basis weight is 20 to 55 g/m², whose density is 0.7 to 0.85 g/cm³, whose moisture is 4 to 6%, whose Beck smoothness is 10 to 800 seconds, whose PH is 4 to 6, and whose air permeability is 15 to 300 sec, but the slip sheets are of course not limited to this.

Next, the sorting apparatus pertaining to the exemplary embodiment of the present invention will be described.

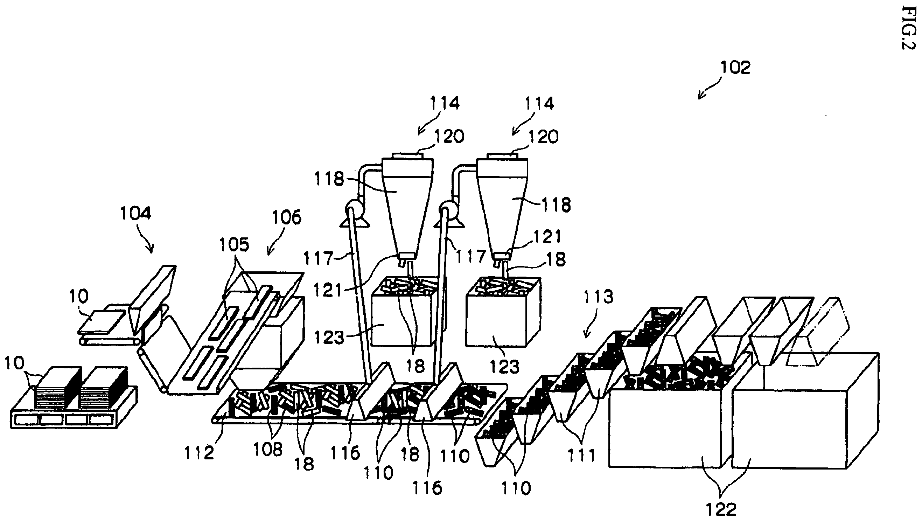

In the processing line 100 shown in FIG. 1, aluminum scraps of non-manufactured products, such as defective products resulting from roll-shifting or the like of the web 12, prototypes, trial-run products and the like, sheet scraps resulting from the PS plates 10, such as expired products, defective products, prototypes and the like, and slit scraps (also including guillotine end material scraps resulting from the guillotine) resulting from ear portions 78 generated by slicing or the like occur, and these scraps are conveyed to a sorting line 102 shown in FIG. 2. It will be noted that nonmetallic impurities (the slip sheets 18, the protective board 62, etc.) are included in these scraps.

A hydraulic cutter 104 is disposed on the sorting line 102. The hydraulic cutter 104 cuts aluminum scraps, sheet scraps, and slit scraps conveyed from the processing line 100, such that one side has a length of at least 50 to 1000 mm, to form cut fragments 105 (cutting step). In the case of the ear portions 78, they are continuously formed in lengths corresponding to the length of aluminum coils, so in view of the fact that their ability to be collected is not good, an unillustrated cutting device may be disposed on the processing line 100 so that scraps resulting from the cutting device cutting the slit scraps into a predetermined length are conveyed to the sorting line 102.

Further, a rotary grinder 106 is disposed downstream of the hydraulic cutter 104 on the sorting line 102 (simply called "downstream" below). The rotary grinder 106 grinds the cut fragments 105 that have been cut by the hydraulic cutter 104 to further fragmentize (one side is 1 to 100 mm or less) the cut fragments 105 (grinding step).

Because the cut fragments 105 are ground by the rotary grinder 106 in this manner, rotational force resulting from a rotary blade (not shown) during grinding acts on the cut fragments 105, torsion occurs, and the cut fragments 105 become deformed. The cut fragments 105 after being ground will be called "ground fragments 108" below.

In the ground fragments 108 that have been deformed in this manner, the slip sheets 18 that had been adhered to the surfaces of the ground fragments 108 by charged adhesion peel away (separate) from the surfaces of the ground fragments 108.

Here, the number of revolutions of the rotary grinder 106 during grinding is set such that the relative velocity of the rotary blade with respect to a fixed blade becomes equal to or greater than 50 m/min. This is because when the relative velocity of the rotary blade with respect to the fixed blade is less than 50 m/minute, the aluminum eats into the slip sheets 18, and the slip sheets 18 become unable to peel away from the surfaces of the ground fragments 108.

A conveyor belt 112 is disposed downstream of the rotary grinder 106. The conveyor belt 112 conveys the ground fragments 108 that have been discharged from a discharge opening in the rotary grinder 106. At this time, the conveyance speed of the conveyor belt 112 with respect to the processing capability of the rotary grinder 106 is adjusted to ensure that the ground fragments 108 are conveyed in a state where they are spread out so that they do not overlap as much as possible.

Two cyclone separators 114 are disposed in the vicinity of the conveyor belt 112. Suction nozzles 116 are disposed in the cyclone separators 114, and sucked objects that have been sucked by the suction nozzles 116 are input into substantially circular cylinder-shaped separation tanks 118 through ducts 117.

Inside the separation tanks 118, there arise swirling airflows that swirl along the inner walls of the separation tanks 118 and upward airflows that flow upward along the axial centers of the separation tanks 118. Of the input objects that have been input inside the separation tanks 118, objects having a large mass spirally move substantially around the axial centers of the separation tanks 118 due to the swirling airflows inside the separation tanks 118 and drop downward due to the action of gravity, and objects having a small mass are discharged from upper discharge openings 120 disposed in the upper portions of the separation tanks 118.

Here, on the conveyor belt 112, the ground fragments 108 and the slip sheets 18 that have peeled away from the surfaces of the ground fragments 108 are mixed together. The ground fragments 108 from whose surfaces the slip sheets 18 have peeled away will be called "aluminum fragments 110" below. The suction force of the suction nozzles 116 is set such that just the slip sheets 18 are sucked because the mass of the slip sheets 18 (about 0.07 to 0.1 g) is quite light with respect to the mass of the aluminum fragments 110 (about 0.6 to 3.3 g), and the slip sheets 18 are sucked by the suction nozzles 116 (sucking step).

Thus, the aluminum fragments 110 from which the slip sheets 18 have peeled away remain and are conveyed on the conveyor belt 112. Then, the aluminum fragments 110 are conveyed, by a conveyor device 113 disposed with plural collection boxes 111 capable of collecting plural aluminum fragments 110, to aluminum fragment recovery boxes 122 disposed downstream of the conveyor device 113, and the aluminum fragments 110 are recovered.

Here, when the protective cardboard 62 is not included in the sheet scraps (PS plates 10), nonmetallic impurities are not mixed inside the aluminum fragment recovery boxes 122, so just pure aluminum is recovered.

After the slip sheets 18 have been sucked by the suction nozzles 116 and input into the separation tanks 118, the slip sheets 18 are discharged from discharge openings 121 disposed in the bottom portions of the separation tanks 118, and air including refuse and the like is discharged from the upper discharge openings 120. Slip sheet recovery boxes 123 are disposed below the discharge openings 121, and the slip sheets 18 from which refuse has been removed are recovered inside the slip sheet recovery boxes 123.

It will be noted that, although the cyclone separators 114 are used here, a simple suction device may also be used because it suffices as long as just the slip sheets 18 can be sucked.

Incidentally, sometimes the protective cardboard 62 is also included in the sheet scrap. The mass of ground paper fragments 63 of the ground protective cardboard 62 is about 1.52 to 2.57 g, which is not that different from the mass of the aluminum fragments 110, which is about 0.6 to 3.3 g. Consequently, when the suction nozzles 116 attempt to also suck the ground paper fragments 63, the aluminum fragments 110 also end up being sucked, so it is difficult to sort the ground paper fragments 63 and the aluminum fragments 110 by this method.

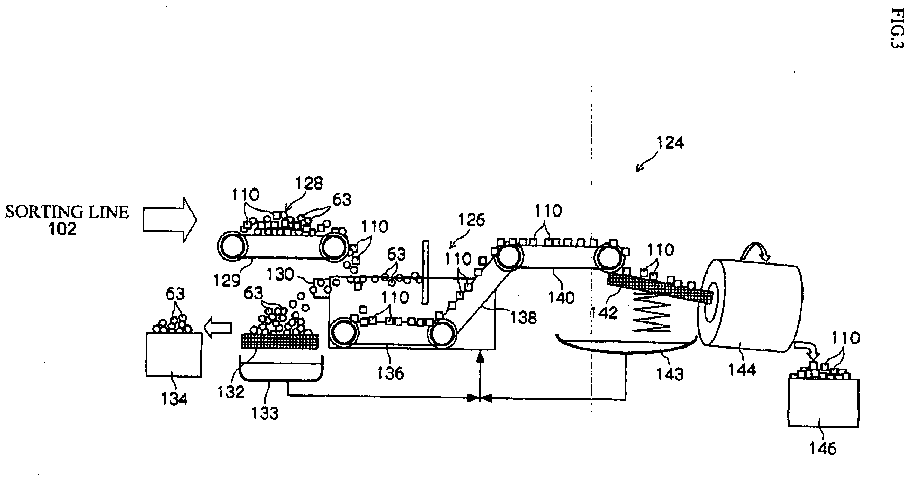

For this reason, in order to sort the ground paper fragments 63 and the aluminum fragments 110 from which the slip sheets 18 have peeled away, mixed objects 128 comprising a mixture of the aluminum fragments 110 and the ground paper fragments 63 are conveyed to a sorting line 124 shown in FIG. 3.

A water tank 126 is used in the sorting line 124, and the mixed objects 128 comprising a mixture of the aluminum fragments 110 and the ground paper fragments 63 are input inside the water tank 126 by a conveyor belt 129 (inputting step). Thus, the ground paper fragments 63 float to the surface of the water due to buoyancy and the aluminum fragments 110 sink down into the water so that the mixed objects 128 are sorted.

The ground paper fragments 63 overflow and are discharged from a discharge opening 130 disposed in the water tank 126 (second collecting step). A water drainer 132 is disposed below the discharge opening 130 to ensure that the water is drained from the ground paper fragments 63 (second water draining step). The water-drained ground paper fragments 63 are recovered in a protective cardboard recovery box 134. Here, a reservoir 133 that collects the water is disposed below the water drainer 132, and the water collected inside the reservoir 133 is returned to the water tank 126.

A conveyor belt 136 is disposed in the bottom portion of the water tank 126, and the aluminum fragments 110 sinking down into the water are placed on the conveyor belt 136. A conveyor belt 138 is connected to the conveyor belt 136. One end side of the conveyor belt 138 is disposed inside the water tank 126, and the other end side of the conveyor belt 138 is exposed to the outside of the water tank 126 so that the aluminum fragments 110 conveyed by the conveyor belt 136 are conveyed to the outside of the water tank 126 by the conveyor belt 138 (first collecting step).

A conveyor belt 140 is connected to the conveyor belt 138, and the conveyor belt 140 conveys the aluminum fragments 110 onto a water-draining vibrating sieve 142 disposed downstream of the conveyor belt 140. The water-draining vibrating sieve 142 drains water while imparting vibration to the aluminum fragments 110 (first water draining step).

Then, the aluminum fragments 110 are input inside a dryer 144 disposed downstream of the water-draining vibrating sieve 142 and dried (drying step). The aluminum fragments 110 that have been dried by the dryer 144 are recovered in an aluminum fragment recovery box 146, and inside the aluminum fragment recovery box 146, just pure aluminum is recovered without nonmetallic impurities being mixed in.

Here, a reservoir 143 that collects water is disposed below the water-draining vibrating sieve 142, and the water collected inside the reservoir 143 is returned to the water tank 126.

Next, the action of the sorting apparatus pertaining to the exemplary embodiment of the present invention will be described.

In the present invention, as shown in FIG. 2, the cut fragments 105 are ground by the rotary grinder 106, and rotational force is applied to the cut fragments 105 to cause the cut fragments 105 to become deformed during grinding. Thus, the slip sheets 18 adhering to the surfaces of the ground fragments 108 (the ground fragments 108 are the cut fragments 105 that have been ground) can be peeled away from the ground fragments 108. When just the slip sheets 18 are sucked by the suction nozzles 116 in this state, the ground fragments 108 and the slip sheets 18 are sorted, so just pure aluminum may be recovered.

Table 1 shows, with respect to sheet scraps and guillotine end material scraps, a comparison between ground products (the ground fragments 108) ground by the rotary grinder 106 and cut products cut by the cutter.

**TABLE 1**

| Scrap Class | Fragmentizing Format | Fragmentized Size (mm) | Input | Sucking/Sorting Test Result | |
|---|---|---|---|---|---|
| | | | AL + Slip Sheets | AL + Slip Sheets (wt %) | |
| | | | (kg) | AL Sort Rate | Slip Sheet Mix Rate |
| Sheet Scraps | Ground Products | 0.30 t 10 × 20 to 50 × 50 | 1000 | 99.95 | 0.05 |
| Guillotine End Material Scraps | Ground Products | 0.24 t 5 × 20 to 70 | 1000 | 99.97 | 0.03 |
| | | 0.15 t 5 × 20 to 70 | 1000 | 99.88 | 0.12 |
| Sheet Scraps | Cut Products | 0.24 t 20 × 93 to 190 | 1000 | 97.93 | 2.07 |
| | | 0.24 t 20 × 20 to 50 | 1000 | 99.51 | 0.49 |

Although it is not shown, if the cut fragments are just cut with a cutter, there is little breakage and deformation in the cut fragments, so the slip sheets cannot be peeled away from the surfaces of the cut fragments and it is easy for the cut fragments to overlap each other on the conveyor belt 112 (see FIG. 2) and be conveyed in an overlapped state. When the cut fragments overlap each other, it is extremely difficult to suck just the slip sheets from the cut fragments, and the cut fragments and the slip sheets become mixed together.

In the experimental results shown in Table 1, with respect to cut products of 20 × 93 to 190 mm with a plate thickness of 0.24 mm, the mix rate of the slip sheets mixed therewith inside the aluminum fragment recovery box 122 is 2.07%, and the mix rate of the slip sheets is 0.49% with respect also to cut products of 20 × 20 to 50 mm that had been further fragmentized.

However, by causing the cut fragments 105 to be deformed (the ground fragments 108) as in the present invention, it becomes possible not only to peel away the slip sheets 18 from the surfaces of the ground fragments 108 but also to suck just the slip sheets 18 because it becomes difficult for the ground fragments 108 to overlap each other.

It will be understood that, even in the experimental results shown in table 1, the mix rate of the slip sheets is 0.12% or less regardless of the size of the ground fragments. Here, the plate thickness of the ground fragments is changed and data are taken. When the plate thickness of the ground fragments is too thin, the slip sheets eat into the aluminum, and when the plate thickness of the ground fragments is too thick, the lifespan of the blades used in the rotary grinder 106 becomes short which results in problems, but a plate thickness in the range of 0.24 mm to 0.3 mm is preferable.

Further, because the ground fragments 108 become deformed, it is easy for the ground fragments 108 to flip over during conveyance by the conveyor belt 112, and there are virtually no instances of the slip sheets 18 becoming buried under the ground fragments 108. That is, the problem of being unable to suck the slip sheets 18 due to the weight of the ground fragments 108 virtually does not arise.

It will be noted that plural steps may be disposed on the conveyor belt 112 so that large vibrations are imparted to the ground fragments 108 to be conveyed. Thus, the ground fragments 108 can be actively flipped and overlapping ground fragments 108 can be scattered.

As described above, in the present invention, first, the web 12 is cut into a predetermined size, so that the effort of sorting aluminum scraps, sheet scraps, slit scraps, and the like with different sizes into predetermined sizes may be saved, and cost and time can be reduced. Further, by causing the ground fragments 108 to be deformed, the slip sheets 18 can be peeled away from the surfaces of the ground fragments 108, so the process of peeling away the slip sheets 18 from the ground fragments 108 is implementable with a simple apparatus in comparison to peeling away the slip sheets 18 with a solvent or the like.

Further, in this manner, by recycling the aluminum fragments 110, which are pure aluminum from which nonmetallic impurities have been removed, fly ash resulting from combustion of nonmetallic impurities arising when the aluminum fragments 110 are melted can be prevented, and oxidation of the surfaces of the aluminum fragments 110 resulting from combustion of nonmetallic impurities can be controlled. For this reason, loss at the time of melting can be kept to a minimum, and manufacture of the web 12 that is efficient and inexpensive is enabled.

When the ground paper fragments 63 are included in the sheet scraps, as shown in FIG. 3, the mixed objects 128 comprising a mixture of the aluminum fragments 110 and the ground paper fragments 63 are input into the water tank 126 to perform sorting by using the difference in specific gravity between the aluminum fragments 110 and the ground paper fragments 63.

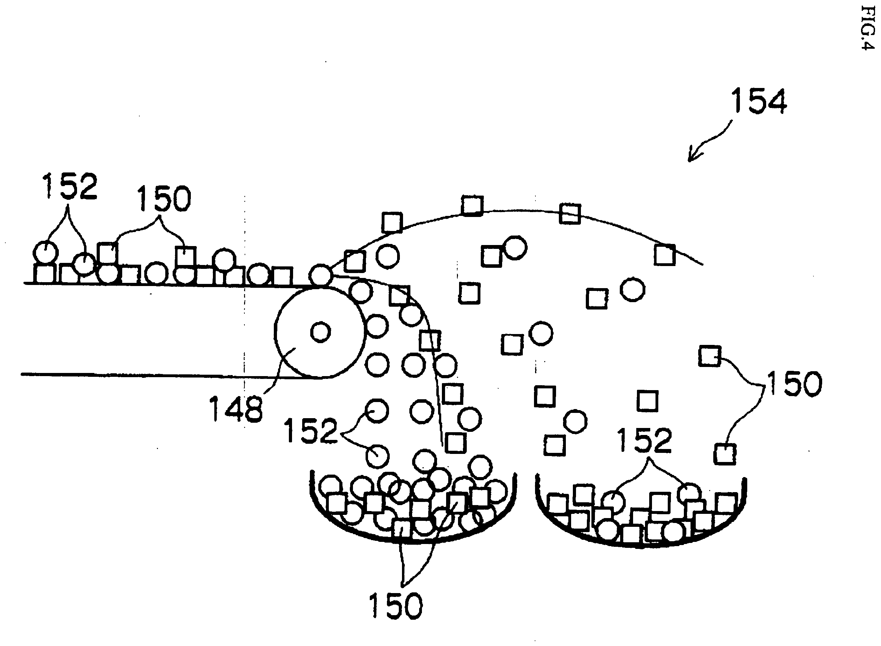

As shown in FIG. 4, in comparison to a case where a magnetic separator 154 is used which uses a permanent magnet 148 rotating at a high speed so that an eddy current is generated, aluminum fragments 150 are instantaneously caused to generate magnetic force, the aluminum fragments 150 are flicked around and the aluminum fragments 150 and paper fragments 152 are sorted, the separating rate in the present invention is high and the ground fragments 108 and the ground paper fragments 63 can be precisely sorted. Further, in comparison to when the magnetic separator 154 is used, the equipment cost is low and can be reduced about 63%.

Further, although it is not shown, there is also an air separator that uses differences in specific gravity to sort aluminum and paper material. However, because the separation rate is also low in comparison to the present invention and the apparatus itself must be high, building improvement becomes necessary and the cost increases.

## Claims

1. A sorting apparatus for sorting non-metallic impurities and lithographic printing plates, comprising:
a cutting portion (39) that cuts a metal web (12) protected by slip sheets (18) into a predetermined size;
a grinding portion (106) that grinds and deforms cut fragments (105) formed by the cutting portion (39);
a conveyor belt (112) that conveys ground fragments (108) formed by the grinding portion (106); and
a sucking portion that sucks the ground slip sheets (18) from the ground fragments (108) deformed by the grinding portion (106) while being conveyed on the conveyor belt (112).

2. The sorting apparatus of claim 1 wherein the metal web (12) is protected by slip sheets (18) and also by protective members
further comprising:
a inputting portion that inputs into a water tank (126) the ground protective members (63) and the ground fragments (110) from which the slip sheets (18) are removed by the sucking portion;
a first collecting portion that collects the ground fragments (110) sinking down inside the water tank (126); and
a second collecting portion that collects the ground protective members (63) floating up to the water surface in the water tank (126).

3. The sorting apparatus of claim 2, further comprising
a first water draining portion (142) that drains water from the ground fragments (110) collected by the first collecting portion and
a second water draining portion (132) that drains water from the ground protective members (63) collected by the second collecting portion.

4. The sorting apparatus of claim 3, further comprising a drying portion (144) that dries the ground fragments (110) from which water is drained by the first water draining portion (142).

5. The sorting apparatus of claim 3, wherein the water drained by the first water draining portion (142) and the second water draining portion (132) is returned to the water tank (126).

6. The sorting apparatus of claim 4, wherein the water drained by the first water draining portion (142) and the second water draining portion (132) is returned to the water tank (126).

7. The sorting apparatus of claim 1, wherein a plurality of steps are disposed on the conveyor belt (112) so that large vibrations are imparted to the ground fragments (108).

8. The sorting apparatus of claim 7, wherein the plate thickness of the ground fragments (108) is set to the range of 0.24 mm to 0.3 mm during grinding by the grinding portion (106).

9. The sorting apparatus of claim 7, wherein the plate thickness of the ground fragments (108) is set to the range of 0.1 mm to 0.5 mm during grinding by the grinding portion (106).

10. The sorting apparatus of claim 7, wherein the plate thickness of the ground fragments (108) is set to the range of 0.05 mm to 1 mm during grinding by the grinding portion (106).

11. A sorting method for sorting non-metallic impurities and lithographic printing plates comprising:
a cutting step of cutting a metal web (12) protected by slip sheets (18) into a predetermined size;
a grinding step of grinding and deforming cut fragments (105) formed in the cutting step; and
a sucking step of sucking the ground slip sheets (18) from ground fragments (108) deformed in the grinding step .

12. The sorting method of claim 11, wherein the plate thickness of the ground fragments (108) is set to the range of 0.24 mm to 0.3 mm during grinding in the grinding step.

13. The sorting method of claim 11, wherein the plate thickness of the ground fragments (108) is set to the range of 0.05 mm to 1 mm during grinding in the grinding step.

14. The sorting method of claim 11 wherein:
in the cutting step a metal web (12) protected by protective members (62) and slip sheets (18) is cut into a predetermined size and the sorting method further comprising an inputting step of inputting into a water tank (126) the ground protective members (63) and the ground fragments (110) from which the slip sheets (18) are removed in the sucking step;
a first collecting step of collecting the ground fragments (110) sinking down inside the water tank (126); and
a second collecting step of collecting the ground protective members (63) floating up to the water surface in the water tank (126).

15. The sorting method of claim 14, further comprising
a first water draining step of draining water from the ground fragments (110) collected in the first collecting step and
a second water draining step of draining water from the ground protective members (63) collected in the second collecting step.

16. The sorting method of claim 15, further comprising a drying step of drying the ground fragments (110) from which water is drained in the first water draining step.

## Patentansprüche

1. Trennvorrichtung zum Trennen nichtmetallischer Verunreinigungen und lithographischer Druckplatten, die umfasst:
einen Schneidabschnitt (39), der eine durch Zwischenlagen (18) geschützte Metallbahn (12) auf eine vorgegebene Größe schneidet;
einen Mahlabschnitt (106), der durch den Schneidabschnitt (39) erzeugte Schnittfragmente (105) mahlt und verformt;
ein Förderband (112), das durch den Mahlabschnitt (106) erzeugte gemahlene Fragmente (108) befördert; und
einen Absaugabschnitt, der die gemahlenen Zwischenlagen (18) von durch den Mahlabschnitt (106) gemahlenen Fragmenten (108) absaugt während der Beförderung auf dem Förderband (112).

2. Trennvorrichtung nach Anspruch 1, wobei die Metallbahn (12) durch Zwischenlagen (18) und auch durch schützende Elemente geschützt wird,
wobei sie des Weiteren umfasst:
einen Einleitabschnitt, der in einen Wasserbehälter (126) die gemahlenen schützenden Elemente (63) und die gemahlenen Fragmente (110) einleitet, von denen die Zwischenlagen (18) durch den Absaugabschnitt entfernt worden sind;
einen ersten Auffangabschnitt, der die im Inneren des Wasserbehälters (126) nach unten sinkenden gemahlenen Fragmente (110) auffängt; und
einen zweiten Auffangabschnitt, der die zu der Wasseroberfläche in dem Wasserbehälter (126) nach oben schwimmenden gemahlenen schützenden Elemente (63) auffängt.

3. Trennvorrichtung nach Anspruch 2, die des Weiteren umfasst:
einen ersten Wasser-Ableitabschnitt (142), der Wasser von den durch den ersten Auffangabschnitt aufgefangenen gemahlenen Fragmenten (110) ableitet, und
einen zweiten Wasser-Ableitabschnitt (132), der Wasser von den durch den zweiten Auffangabschnitt aufgefangenen gemahlenen schützenden Elementen (63) ableitet.

4. Trennvorrichtung nach Anspruch 3, der des Weiteren einen Trockenabschnitt (144) umfasst, der die gemahlenen Fragmente (110), von denen durch den ersten Wasser-Ableitabschnitt (142) Wasser abgeleitet wird, trocknet.

5. Trennvorrichtung nach Anspruch 3, wobei das durch den ersten Wasser-Ableitabschnitt (142) und den zweiten Wasser-Ableitabschnitt (132) abgeleitete Wasser zu dem Wasserbehälter (126) zurückgeleitet wird.

6. Trennvorrichtung nach Anspruch 4, wobei das durch den ersten Wasser-Ableitabschnitt (142) und den zweiten Wasser-Ableitabschnitt (132) abgeleitete Wasser zu dem Wasserbehälter (126) zurückgeleitet wird.

7. Trennvorrichtung nach Anspruch 1, wobei an dem Förderband (112) eine Vielzahl von Absätzen angeordnet sind, so dass die gemahlenen Fragmente (108) in starke Schwingungen versetzt werden.

8. Trennvorrichtung nach Anspruch 7, wobei die Dicke der gemahlenen Fragmente (108) beim Mahlen mit dem Mahlabschnitt (106) auf den Bereich von 0,24 mm bis 0,3 mm eingestellt ist.

9. Trennvorrichtung nach Anspruch 7, wobei die Dicke der gemahlenen Fragmente (108) beim Mahlen mit dem Mahlabschnitt (106) auf den Bereich von 0,1 mm bis 0,5 mm eingestellt ist.

10. Trennvorrichtung nach Anspruch 7, wobei die Dicke der gemahlenen Fragmente (108) beim Mahlen mit dem Mahlabschnitt (106) auf den Bereich von 0,05 mm bis 1 mm eingestellt ist.

11. Trennverfahren zum Trennen nichtmetallischer Verunreinigungen und lithographischer Druckplatten, das umfasst:
einen Schneidschritt, in dem eine durch Zwischenlagen (18) geschützte Metallbahn (12) auf eine vorgegebene Größe geschnitten wird;
einen Mahlschritt, in dem in dem Schneidschritt erzeugte geschnittene Fragmente (105) gemahlen und verformt werden; und
einen Absaugschritt, in dem die gemahlenen Zwischenlagen (18) von in dem Mahlschritt verformten gemahlenen Fragmenten (108) abgesaugt werden.

12. Trennverfahren nach Anspruch 11, wobei die Dicke der gemahlenen Fragmente (108) beim Mahlen in dem Mahlschritt auf den Bereich von 0,24 mm bis 0,3 mm eingestellt wird.

13. Trennverfahren nach Anspruch 11, wobei die Dicke der gemahlenen Fragmente (108) beim Mahlen in dem Mahlschritt auf den Bereich von 0,05 mm bis 1 mm eingestellt wird.

14. Sortierverfahren nach Anspruch 11, wobei:
in dem Schneidschritt eine von schützenden Elementen (62) und Zwischenlagen (18) geschützte Metallbahn (12) auf eine vorgegebene Größe geschnitten wird und das Trennverfahren des Weiteren umfasst:
einen Einleitschritt, in dem die gemahlenen schützenden Elemente (63) und die gemahlenen Fragmente (110), von denen die Zwischenlagen (18) in dem Absaugschritt entfernt werden, in einen Wasserbehälter (126) eingeleitet werden;
einen ersten Auffangschritt, in dem die gemahlenen Fragmente (110) aufgefangen werden, die im Inneren des Wasserbehälters (126) nach unten sinken; und
einen zweiten Auffangschritt, in dem die gemahlenen schützenden Elemente (63) aufgefangen werden, die in dem Wasserbehälter (126) zu der Wasseroberfläche schwimmen.

15. Trennverfahren nach Anspruch 14, das des Weiteren umfasst:
einen ersten Wasser-Ableitschritt, in dem von den in dem ersten Auffangschritt aufgefangenen gemahlenen Fragmenten (110) Wasser abgeleitet wird, und
einen zweiten Wasser-Ableitschritt, in dem von den in dem zweiten Auffangschritt aufgefangenen gemahlenen schützenden Elementen (63) Wasser abgeleitet wird.

16. Trennverfahren nach Anspruch 15, das des Weiteren einen Trockenschritt umfasst, in dem die gemahlenen Fragmente (110), von denen in dem ersten Wasser-Ableitschritt Wasser abgeleitet wird, getrocknet werden.

## Revendications

1. Appareil de tri pour trier des impuretés non métalliques et des plaques de lithographie, comprenant :
une partie de coupe (39) qui coupe une bande de métal (12) protégée par des macules (18) à une taille prédéterminée ;
une partie de meulage (106) qui meule et déforme les fragments (105) coupés formés par la partie de coupe (39) ;
une courroie de transporteur (112) qui transporte des fragments (108) meulés formés par la partie de meulage (106) ; et
une partie d'aspiration qui aspire les macules (18) meulées des fragments (108) meulés déformés par la partie de meulage (106) tout en étant transportés sur la courroie de transporteur (112).

2. Appareil de tri selon la revendication 1, dans lequel la bande en métal (12) est protégée par des macules (18) et également par des éléments de protection,
comprenant en outre :
une partie d'entrée qui fait entrer, dans un réservoir d'eau (126), les éléments de protection (63) meulés et les fragments (110) meulés desquels les macules (18) sont retirées par la partie d'aspiration ;
une première partie de collecte qui collecte les fragments (110) meulés s'enfonçant à l'intérieur du réservoir d'eau (126) ; et
une seconde partie de collecte qui collecte les éléments de protection (63) meulés flottant à la surface d'eau dans le réservoir d'eau (126).

3. Appareil de tri selon la revendication 2, comprenant en outre une première partie de drainage d'eau (142) qui draine l'eau des fragments (110) meulés collectés par la première partie de collecte, et
une seconde partie de drainage d'eau (132) qui draine l'eau des éléments de protection (63) meulés collectés par la seconde partie de collecte.

4. Appareil de tri selon la revendication 3, comprenant en outre une partie de séchage (144) qui sèche les fragments (110) meulés desquels l'eau a été drainée par la première partie de drainage d'eau (142).

5. Appareil de tri selon la revendication 3, dans lequel l'eau drainée par la première partie de drainage d'eau (142) et la seconde partie de drainage d'eau (132) est renvoyée vers le réservoir d'eau (126).

6. Appareil de tri selon la revendication 4, dans lequel l'eau drainée par la première partie de drainage d'eau (142) et la seconde partie de drainage d'eau (132) est renvoyée vers le réservoir d'eau (126).

7. Appareil de tri selon la revendication 1, dans lequel une pluralité d'échelons sont disposés sur la courroie de transporteur (112) de sorte que des vibrations importantes soient communiquées aux fragments (108) meulés.

8. Appareil de tri selon la revendication 7, dans lequel l'épaisseur des fragments (108) meulés est de l'ordre de 0,24 mm à 0,3 mm pendant le meulage par la partie de meulage (106).

9. Appareil de tri selon la revendication 7, dans lequel l'épaisseur des fragments (108) meulés est de l'ordre de 0,1 mm à 0,5 mm pendant le meulage par la partie de meulage (106).

10. Appareil de tri selon la revendication 7, dans lequel l'épaisseur des fragments (108) meulés est de l'ordre de 0,05 mm à 1 mm pendant le meulage par la partie de meulage (106).

11. Procédé de tri pour trier des impuretés non métalliques et des plaques de lithographie comprenant :
une étape de coupe pour couper une bande métallique (12) protégée par des macules (18) à une taille prédéterminée ;
une étape de meulage pour meuler et déformer les fragments (105) coupés formés à l'étape de coupe ; et
une étape d'aspiration pour aspirer les macules (18) meulées des fragments (108) meulés déformés à l'étape de meulage.

12. Procédé de tri selon la revendication 11, dans lequel l'épaisseur des fragments (108) meulés est de l'ordre de 0,24 mm à 0,3 mm pendant le meulage à l'étape de meulage.

13. Procédé de tri selon la revendication 11, dans lequel l'épaisseur des fragments (108) meulés est de l'ordre de 0,05 mm à 1 mm pendant le meulage à l'étape de meulage.

14. Procédé de tri selon la revendication 11, dans lequel :
à l'étape de coupe, une bande en métal (12) protégée par des éléments de protection (62) et des macules (18) est coupée à une taille prédéterminée et le procédé de tri comprend en outre
une étape d'entrée pour faire entrer dans un réservoir d'eau (126), les éléments de protection (63) meulés et les fragments (110) meulés desquels les macules (18) ont été retirées à l'étape d'aspiration ;
une première étape de collecte consistant à collecter les fragments (110) meulés qui s'enfoncent à l'intérieur du réservoir d'eau (126) ; et
une seconde étape de collecte consistant à collecter les éléments de protection (63) meulés flottant à la surface de l'eau dans le réservoir d'eau (126).

15. Procédé de tri selon la revendication 14, comprenant en outre
une première étape de drainage d'eau consistant à drainer l'eau des fragments (110) meulés collectés à la première étape de collecte, et
une seconde étape de drainage d'eau pour drainer l'eau des éléments de protection (63) meulés collectés à la seconde étape de collecte.

16. Procédé de tri selon la revendication 15, comprenant en outre une étape de séchage consistant à sécher les fragments (110) meulés desquels l'eau a été drainée lors de la première étape de drainage d'eau.
